# EUROPEAN PATENT SPECIFICATION

(11) **EP 3 772 277 B1**
(45) Date of publication and mention of the grant of the patent: **17.01.2024**
(21) Application number: 19190294.9
(22) Date of filing: 06.08.2019
(51) Int. Cl.: A01M 1/02, A01M 1/22

(54) **DEVICE AND PROCESS FOR MASSIVE CAPTURE OF OLIVE FLIES - ELECTROCUTOR TRAP**
VORRICHTUNG UND VERFAHREN ZUR MASSIVEN ERFASSUNG VON OLIVENFLIEGEN - ELEKTROSCHOCK-FALLE
DISPOSITIF ET PROCEDE DE CAPTURE MASSIVE DE MOUCHES D'OLIVES - PIEGE A ELECTROCUTION

(43) Date of publication of application: 10.02.2021
(73) Proprietor: Universidade de Évora, 7000-803 Évora (PT)
(72) Inventor: Rei, Fernando, 7000-737 Évora (PT); Gomes, Luis, 7040-132 Arraiolos (PT); Andrade, Leonardo, 7000-513 Évora (PT); Tlemcani, Mouhaydine, 7005-753 São Miguel de Machede (PT); Peça, José, 7005-449 Évora (PT); Dias, António, 2025-562 Tremez (PT)
(74) Representative: Monteiro Alves, Inês

(56) References cited:
- CN-A- 107 960 390
- DE-U1- 9 100 914

## Description

### Technical field of the invention

The present invention relates to the development of a device for capturing flying insects, in particular the olive fruit fly (*Bactrocera oleae*)*,* for biological control of this olive grove pest.

This device is autonomous and active in operation and comprises a substantially cylindrically shaped outer body, as well as a fan and an insect-trapping mechanism both placed inside such outer body, whereby the insect-trapping mechanism is composed of an electrocuting device (6) and specific volatile compounds for attracting of insects.

The present invention thus relates to the field of agronomy, phytosanitary protection and biological control of olive grove pests.

### Background of the Invention

Crops are usually attacked by several key insect pests, which can lead to high yield losses. Olive fruit fly is a key olive grove pest and may be the most damaging to some olive groves and may reduce the production of olive oil by over 90%. Given its high impact on olive production and quality, this pest is recurrently limited by the application of synthetic insecticides, a method of control that has several limitations, both current and future. In addition to its impact on useful biodiversity and the environment in general, it can contribute to the presence of chemical residues in production, which has a negative impact on production quality and consumer health.

On the other hand, repeated and intensive application of a pesticide promotes the likelihood of resistance phenomena, as is already the case with the only active substance acting on fly larvae (dimethoate) present inside the olive, reducing or eliminating the action of this substance in limiting the pest.

These problems underline the importance of developing new strategies against olive fruit fly, alternative to chemical control, with no impact on auxiliary insects and consumer health.

Pest limitation, through the mass capture (or massive capture) methodology, is one of the alternatives to be seriously considered, making use of a large number of traps placed in the crop area to capture a large number of pest individuals, thus significantly reducing its population and its impact on the crop.

The current technology for mass capture of olive fruit fly focuses on the use of model OLIPE traps based on the use of 1.5L or similar plastic bottles with a food solution which passively emanates attractive food volatile compounds for adult (especially female) pest insects, the flies being drawn into the device through small holes laterally around the outer body and above the attractive solution level.

Article COUTINHO, J. et al. (2009) "Effectiveness of OLIPE traps in mass capture of olive fruit fly (Bactrocera oleae) in olive groves in organic farming in Beira Interior Sul. In Simpósio Nacional de Olivicultura, 5, Santarém, 24-26 Sep. - Actas Portuguesas de Horticultura. Lisbon: APH. Vol. 14, p. 101-107." describes this type of device and method of capturing these insects, having concluded that the use of OLIPE traps contributes to the reduction of this pest in the olive grove.

Also, the article by PATANITA, I. et al. "Auxiliaries and other means of controlling olive grove pests and diseases. Workshop "Good agro-environmental practices in olive oil row", Escola Superior Agrária de Beja, 2015) describes this problem and various solutions from conventional chemical control to biological control through the application of bioinsecticides and OLIPE devices in the so-called biotechnical control.

In order to influence reducing the fly population, it is recommended to place an OLIPE trap for each or every two olive trees. Given the current and future existence of a large number of intensive and super intensive olive groves (over 2,000 trees/ha) and of large dimension, it is concluded that the OLIPE trap-based method entails such a logistical effort, which makes their practical use in olive groves of this type impossible. In addition, there is still a need to renew the attractive solution and trap cleaning of flies caught in the meantime throughout the campaign. On the other hand, given the small size and side location of their holes, their ability to passively release and disseminate attractive volatiles throughout the crop area is small and ineffective for medium/long-distance insect attraction.

Other prior art documents further disclose devices for capturing insects.

Document CN107960390A refers to a combined pest capture machine comprising a power supply system, an automatic control system and a pest catching and killing system. The pest catching and killing system comprises a primary catching and killing mechanism and a secondary catching and killing mechanism, wherein the primary catching and killing mechanism comprises a cylindrical power grid fence, and a light trapping device, a color plate trapping device and an attractant trapping device are arranged in the cylindrical power grid fence; the secondary catching and killing mechanism comprises a cylindrical shell and a negative pressure blower which is installed in the cylindrical shell, the bottom of the cylindrical power grid fence is connected with the top of the cylindrical shell, and a pest collection device is arranged on the bottom of the cylindrical shell.

According to the combined pest capture machine disclosed in such document, pests are lured by using a color plate in the daytime, pests are trapped and collected by opening the light trapping device in the night, the pests are first killed through the cylindrical power grid fence, secondary catching and killing is conducted by using the negative pressure blower, and the pests obtained after double catching and killing fall into a water storage plate and are thoroughly killed. According to the combined pest capture machine, three catching and killing schemes are used, thus resulting in a low pest escape rate.

There is therefore a need to find and develop a sustainable, environmentally friendly and effective process to limit this pest more autonomously, which maximizes the dissemination of attractive volatiles and the consequent attractive capacity into the traps of pest insects.

The present invention proposes a device according to claim 1 and a process according to claim 12 which solve the above problems of the prior art through biotechnical control using attractive elements for olive fruit fly (*B*. *oleae*) which are actively and passively disseminated, in order to attract and capture it in large quantities, avoiding the reproduction thereof, substantially limiting damage to the olive grove and its olive production.

Although the present disclosure is focused on olive fruit fly control, the device and process of the present invention, based on the elimination of insects by electrocution, can also be applied in the control of other insect pests, including those active during the night, it being only necessary to adapt the attractive compound solutions being placed in the traps to the specificity of the species meant to be caught.

### Description of the Invention

The present invention relates to the development of a device for mass capture of flying insects, in particular olive fruit fly (*B. oleae*)*.*

The device is autonomous and active in operation and comprises a substantially cylindrical outer body, a fan, an electrocution mechanism for trapping and eliminating insects within, and specific volatile compounds to attract this type of insect.

The cylindrical shape of the device, arranged vertically and having openings at the ends thereof, allows to maximize the air circulation on the inside, especially that promoted by thermal convection, in passive manner, due to the expected air heating inside the device when it is under sun exposure. The upper opening allows for easy and efficient release of attractive volatiles around the trap. On the other hand, it also allows easy entry of the insects to be captured, attracted by these volatiles. The lower end is lined with a mesh to prevent insects from entering through this opening, but allows easy entry of air into the trap.

This design is innovative because the traps developed for capturing insects usually have either a lower, side or upper opening, but never two openings on their lower and upper ends, so as to allow the insects to be trapped inside.

In the case of the OLIPE reference trap, attractive volatile compounds are released outwards by small circular holes, about 1 cm in diameter and usually 4 holes, arranged around the body of the device. Passive release of volatile compounds is effective only after the inside space is saturated with these compounds. In turn, the small size and location of the openings is necessary to prevent the eventual subsequent release of flies to the exterior thereof.

In another aspect, the present invention also relates to a process of biotechnic control against flying insects, in particular olive fruit fly, and therefore in particular of the biotechnological control for olive grove protection, which provides for the placement of at least 4 devices of the present invention, or multiples of that number, depending on the area to be protected, arranged in diamond or rectangle, 30 to 40 meters apart, placed at the beginning of the pest activity, prior to the egg laying period in the olives.

The devices may remain in place until production is harvested. This arrangement was defined based on previous studies carried out with this device design, using a reference volatile compound, and under controlled atmosphere conditions, wherein its fan has been in operation for a period of 6h.

Under these conditions it was possible to detect the presence of the volatile substance more than 10 meters from the device, and it is foreseeable that this distance will be increased by the action of the air masses mobility in the olive groves, and by the high sensitivity of sex pheromone detection by pest males, which is far superior to the detection capabilities of laboratory apparatus/techniques developed for this purpose. By comparison, it was not possible to detect the presence of the reference volatile substance emitted from the reference OLIPE trap, 0.5 meters from its location.

The device of the present invention further provides for accessories which are intended to increase its working capacity, such as the existence of small solar panels capable of producing power to supply the fan and the presence of humidity and temperature sensors, capable of controlling the start of operation of said fan or putting it in idle mode.

### Description of the figures

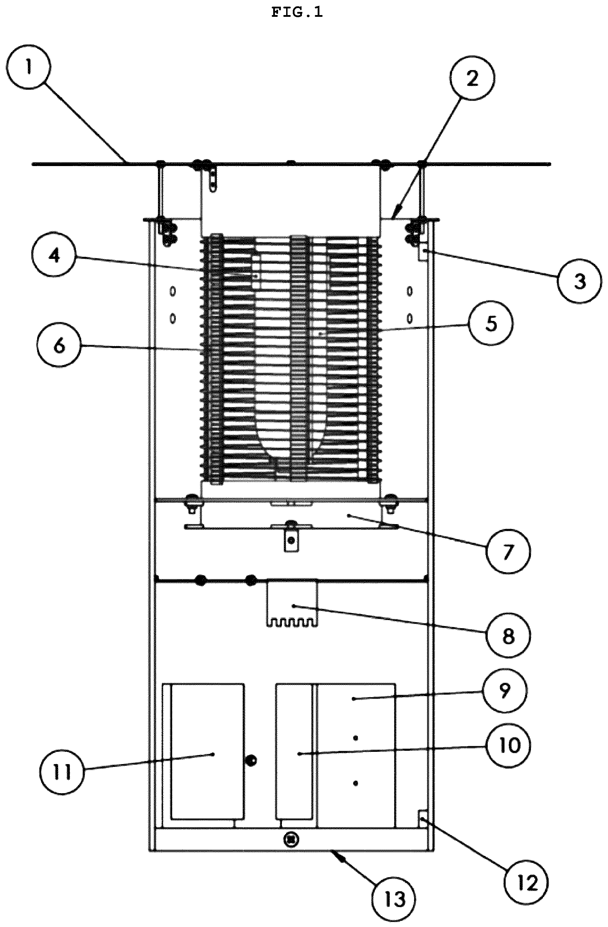

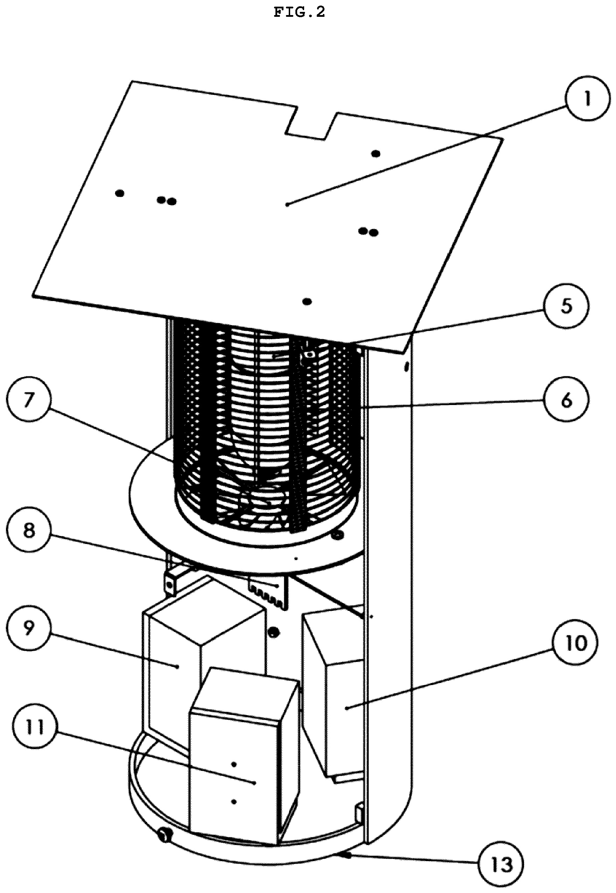

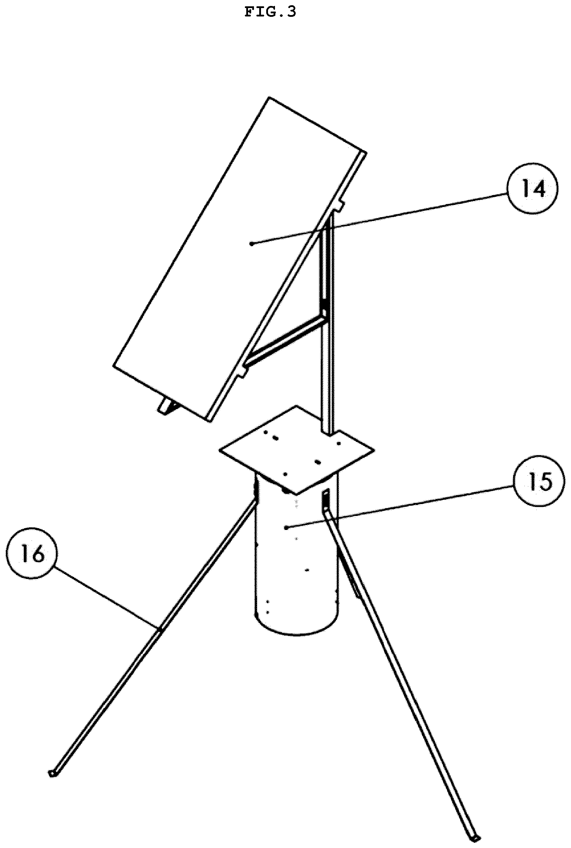

**Fig. 1** represents the embodiment of the device of the present invention, model "Electrocuting device", in a side view, wherein:
   1 - Represents the outer body cap
   2 - Represents the upper opening of the outer body
   3 - Represents a switch to cut-off the current (cut-off switch)
   4 - Represents a sex pheromone diffuser
   5 - Represents a container with a solution containing an attractive food compound or combination of compounds
   6 - Represents an electrocuting device
   7 - Represents a fan
   8 - Represents the absorbent material to contain the attractive food solution
   9 - Represents a battery
   10 - Represents the box with the electronic circuit regulating the device operation (fan/thermometer/electrocuting device)
   11 - Represents the current converter and the solar panel power manager
   12 - Represents the temperature and humidity sensor
   13 - Represents lower opening of the outer body
**Fig. 2** represents the embodiment of the device of the present invention, model "Electrocuting device", in a perspective view, wherein:
   1 - Represents the outer body cap
   5 - Represents a container with a solution containing an attractive food compound or combination of compounds
   6 - Represents an electrocuting device
   7 - Represents a fan
   8 - Represents the absorbent material to contain the attractive food solution
   9 - Represents a battery
   10 - Represents the box with the electronic circuit regulating the device operation (fan/thermometer/electrocuting device)
   11 - Represents the current converter and the solar panel power manager
   13 - Represents lower opening of the outer body
**Fig. 3** represents the embodiment of the device of the present invention, model "electrocuting device", in a complete assembly view, wherein:
   14 - Represents the solar panel
   15 - Represents the body of the device
   16 - Represents the support feet of the device
**Fig. 4** represents another embodiment of the device of the present invention, model "Electrocuting device", with the solar panel placed on the ground next to the device, wherein:
   14 - Represents the solar panel
   15 - Represents the body of the device
   16 - Represents the support feet of the device
**Fig**. **5** represents another embodiment of the device of the present invention, model "Electrocuting device", with the outer body mounted on a vertical pole, wherein:
   14 - Represents the solar panel
   15 - Represents the body of the outer body
   17 - represents a vertical support - pole.

### 1. Characterization of the capturing device

The device of the present invention comprises an outer body (15), a fan (7), a flying insect trapping mechanism composed of an electrocuting device (6), and a solution of specific volatile compounds to attract a particular type of insect.

Preferably, the target insect to capture is the olive fruit fly (*B. oleae*)*.*

The outer body (15) is substantially cylindrical in shape, about 50 to 100 cm high, preferably about 60 to 80 cm high, more preferably about 70 cm high, and 30 cm in diameter. Its vertical placement, having openings at its two ends (2 and 13), allows to maximize the air entry and exit from the interior thereof, by thermal convection, and actively by the operation of its fan (7).

The outer body (15) may be made of any type of material that withstands outdoor environmental conditions, such as plastic (PVC). Other materials such as metal (aluminum) and wood may be used. The outer body, being made of metallic material such as aluminum alloy, can be equally lightweight and more resistant to natural elements, while being easier to clean and maintain. However, it contributes to significantly increase the temperature inside the outer body (15), impacting the operation of the electronic components (10) necessary for the device operation, namely the fan control (7) and the electrocuting device (6). Material such as wood increases the cost and weight of the trap.

The outer body (15), being made of plastic, metal (aluminum) or wood material, has characteristics of lightness and resistance to natural elements, and protection of its internal components.

In all the aforementioned forms, the device of the present invention may be placed on the ground above removable or non-removable supports (16) for this purpose, on existing supports, thus being used for this purpose or suspended on poles (17) placed for this purpose.

Inside thereof, the device comprises a cyclically operated fan (7), i.e. with interruptions in its operation in order to save energy, and a current converter (11), which converts the 12v alternating current into direct current between 220 to 270v, which is supplied to the electrocuting device.

Power for the operation of electrical and electronic components can be supplied by an individual battery (9), powered by a photovoltaic solar panel (14) and its regulator (11), ensuring the autonomy thereof during operation, or via a small electric generator network-connected to more than one device (not shown in the figures).

The main purpose of the fan (7) is to promote air circulation within the outer body (15) to promote and maximize the dissemination of volatile compounds intended to attract insects to capture and limit and, therefore, it is understood that the device of the invention actively promotes pest capture and control.

In contrast, the passive form of pest control occurs when the fan (7), which is set to operate in cycles, i.e. for a period of time followed by a pause, is in idle mode during which the device only passively diffuses volatile insect attracting compounds by thermal convection, favored and maximized by the vertical and cylindrical shape of the outer body (15) and the existence of openings at both ends thereof (2 and 13).

These volatile compounds may be gradually dispensed from an attractive food solution prepared for the purpose, stored in suitable containers (5), depending on the amount and type of solution composition and/or from sex pheromone diffusers (4), by placing 2 to 3 diffusers per trap.

The solution of attractive compounds may be placed on an absorbent material (8), such as a fabric or sponge, with flaps/notches to facilitate air circulation and air contact with such material, and to promote the volatility and diffusion of the volatile compounds.

The absorbent material (8), which may be a sponge-fabric rectangle, or other commercially available absorbent material/structure, saturated with attractive food solution, is suspended inside the device and below the fan via an attaching structure, such as a wire, which attaches it to supports on the inner walls of the trap. The absorbent material is fed through a tube from the container (5) arranged inside the electrocuting device (6).

When present, pheromone diffusers (3) are placed above the fan (7), near the attractive solution container (5), which is arranged inside the electrocuting device (6), near the upper opening (2) of the device.

Volatile compounds suitable for attracting these insects are, for example, compounds emanating from attractive food solutions, sex or aggregation pheromones, etc., and combinations thereof currently available on the market. For the specific case of olive fruit fly are, for example, commercially available 4% ammonium dihydrogen phosphate solutions, Endomysil and pest-specific sex pheromone diffusers.

To obtain the limiting effect on the pest population, it is recommended to place at least 4 diamond-shaped devices of the present invention spaced 30 to 40 meters apart at the beginning of the pest activity in advance of the laying egg period in the olives for an influence area of about 3600 m², i.e. 11 to 12 devices per hectare.

Attractive food volatile compounds have the primary function of attracting flies, especially laying females, while sex pheromone-based compounds help to attract males (in this species), with the added benefit of creating a confusing sexual effect, preventing males from finding and fertilizing females due to sex pheromone saturation in the area of influence of the airflow produced by the capture station, this being an added advantage of the invention.

Volatile substances may be emitted from 4% ammonium dihydrogen phosphate solutions, Endomysil and sex pheromone diffusers. Considering the size of the two attractive solution containers (5) (1.5 L each) it is expected that they will need to be replaced after 1 to 1.5 months, depending on the outside temperature of the trap. Regarding sex pheromone diffusers (3), their replacement depends on the information provided by the manufacturer. In the case of diffusers used in the tests performed, their replacement should take place between 1.5 and 2 months.

In addition to the attractive effect of the males inside the outer body for subsequent capture/death, it is intended to promote the effect of 'sexual confusion' on the influence area of the devices, i.e. 20 to 30 meters radius, according to values obtained with a reference volatile in controlled atmosphere studies. Due to the release of the sex pheromone by the outer body (15), the atmosphere surrounding the device relative to the above-described radius will make it difficult for males to identify the presence of females present in the area and thus to inseminate their eggs. For this purpose, it is recommended to place 2-3 sex pheromone diffusers (3) inside each trap.

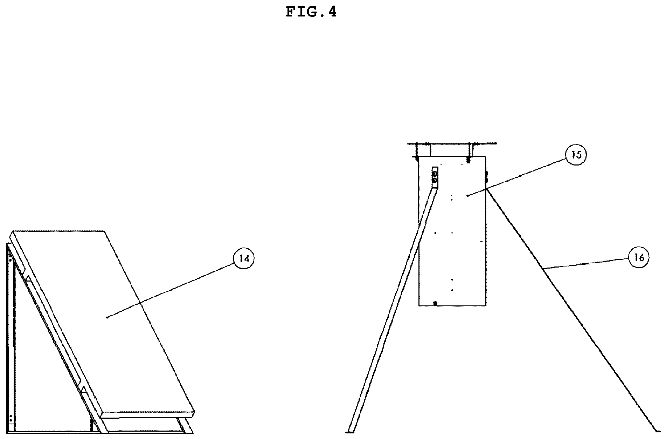

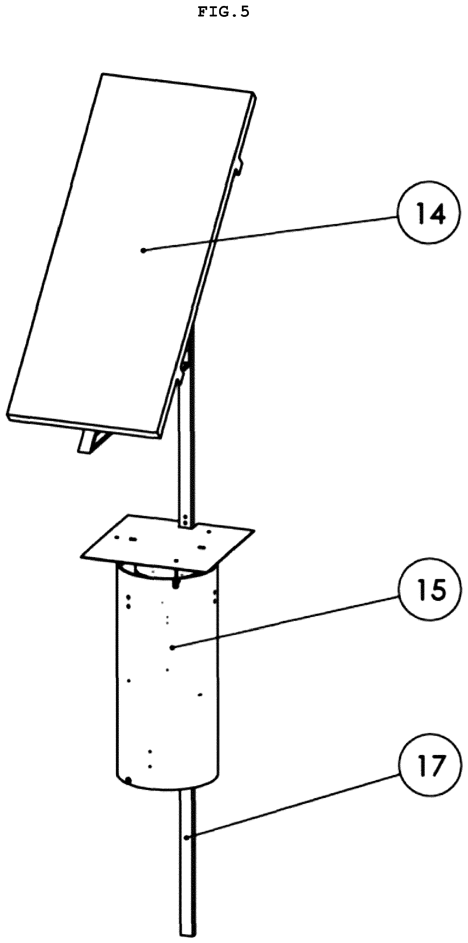

The capturing device may be placed on vertical purpose-built supports, such as metal feet (16), other existing vertical supports, or yet vertical poles/supports (17) arranged for this purpose, which allow the top of the outer body (15) to be attached at a height of about 1.5 m from the ground, this usually being the recommended height to maximize the attraction of the olive fruit fly, given the more recurring location of the flies in olive treetops, in order to favor solar panel exposure (14) for a longer period of time and to facilitate access to the interior of the device for maintenance purposes, through its lower (13) and upper (2) openings. Alternatively, and in areas with constant and high wind, the solar panels (14) may be placed under a metal support structure (16), consisting of 2 side-by-side triangles, screwed to 2 wooden or cement bases, placed at ground level. It preferably comprises 2 side-by-side triangles, screwed to 2 wooden or cement bases, set at ground level (Fig. 4).

Thus, the device of the present invention actively and passively promotes the attraction of insects inwardly by food and sexual attraction, thereby limiting and controlling pest populations, either by reducing the number of individuals by their capture and subsequent collection, or by disturbing its reproduction through sexual confusion by placing diffusers (4) containing sex pheromones in the outer body during the fly breeding season. To maximize this objective, it is recommended to place two or three sex pheromone diffusers (4) inside the outer body (15).

Its active mode of operation also significantly reduces the number of devices to be used per hectare of crop compared to the model trap (OLIPE) and the logistical needs necessary for its proper functioning and efficiency, allowing its use in olive groves with reduced planting distance, such as intensive and super intensive models.

Its design allows maximizing the release of volatiles, not only actively but passively, by thermal convection. By annihilating insects by being trapped and eliminated in the capture medium, an electrocuting device (6) of large size and surface does not require periodic cleaning of the device to remove trapped insects, which could otherwise reduce the available surface of the electrocuting device (6) for retaining more insects.

The substantially cylindrical shape of the outer body (15) allows to maximize the formation and conduction of the airflow actively produced by the fan (7), as well as passive release of volatile insect-attracting compounds by thermal convection.

The volatile attractive food solution container (5), with a total volume of about 3 liters, guarantees its autonomous operation over an operation period of one to one and a half months in order to limit egg laying of the pest in the olives. This period may vary depending on the weather conditions verified on the olive groves to be treated and therefore it is recommended to place the devices when the adult flight begins, predictably in early Spring, shortly after the start of the pest activity and before the expected breeding season of these insects, which occurs roughly during the olive lignification (endocarp) phase and may remain on the field until the harvesting phase, that is, a period which may vary from 7 to 8 months in Mediterranean climates, where olive growing is more frequent, usually during spring, early summer, and autumn.

The mass capture device/station comprises therein a substantially cylindrical electrocuting device (6) for eliminating flies drawn into the outer body (15).

The device also has safety systems, namely a temperature sensor (12) that turns off the device operation to safeguard the electrical/electronic components (10 and 11) inside, when the temperature reaches 40°C, and a cut-off switch (3), to disconnect the electrical current inside the outer body (15), and specifically from the electrocuting device (6), allowing for safe maintenance operations inside the trap.

The operation of the capturing device is performed and regulated through several devices, namely: a power manager (MPPT) to manage the energy flow between the solar panel and the battery; a DC/AC converter to raise the direct current voltage from 12V (battery/solar panel) to 270v alternating current; a diode bridge consisting of 4 diodes that "convert" the alternating into direct current which is subsequently supplied to the electrocuting device electrodes; Raspberry Pi3 microcomputer for management and operation of other electrical components; relay module to control the electrocuting device and fan; RTC DS1306 module to secure the date and time on the device, allowing the system to determine whether it is day or night in the device duty cycle; DTH11 module, composing a temperature and humidity sensor.

### 1.1 Operation

Insects, attracted by volatile attracting compounds, enter the opening (2) from above and are guided to an electrocuting device (6) through the flow of volatile compounds emanating from within either by active fan action (7), or passively, only by its volatilization and by thermal convection. To reduce the risk of fire due to the projection from the device outwards of incandescent debris or bits of insect, the electrocuting device (6) is completely enclosed within the outer body (15) of the capturing device.

The attractive solution is dispensed from an absorbent material (8), a sponge or other absorbent textile or ceramic material impregnated with the solution released from a container (5) located within the electrocuting device (6).

The volatile compounds of the attractive solution are sucked in by the fan (7) and sent into the electrocuting device (6), exiting through the openings between the contacts thereof and then outwards through the opening (2) at the top of the device. As volatiles leave the interior of the electrocuting device (6), the attraction of insects to the contacts thereof is thus maximized.

In a preferred embodiment of the invention, the device has an opening (2) at its top, with a free height of about 6 cm, to promote and facilitate the exit of attractive volatiles out of the outer body (15) and the subsequent entry of insects into the upper opening (2). The existence of a plate (1) at the top of the outer body (15), which is larger than the diameter of the capturing device, protects its interior from climatic effects (e.g. precipitation).

In order to prevent the possible release of incandescent debris from electrocuted insects, which could lead to fire, during operating periods of the device coinciding with the driest and hottest times of the year, the electrocuting structure (6) is completely inserted and protected within the device, there are no side openings in the outer body (15) as in the existing traps based on insect electrocuting devices.

### 2. Flying insect capture process

Operation Process:
a) Placing devices in the field, preferably in early Spring, before the fly breeding season,
b) placing the devices at least 30 m apart from each other, in a diamond or rectangle arrangement, between the inter rows of the olive grove, in a total of 11 to 12 devices per hectare of crop,
c) inspecting the level of attractive solution in the outer body (15) containers and replacing thereof, if necessary,
d) checking the amount of insects caught on the wires of the electrocuting device and assessing the need for cleaning thereof,
e) checking the condition of the solar panels and their wiring, connected to the current regulators and batteries, inside the devices.

Replacement of the liquid can be performed directly via a breathing/feeder tube at the top of the container, no disassembly of any device component being this required.

To clean the electrocuting device, the removal of the outer body (15) cap is required.

Once the olive has been harvested, the devices and their solar panels can be removed from the olive grove after disconnecting from their current regulators inside the outer body.

### Examples

### Example 1. Olive fruit fly capturing device

The mass capturing device, model - electrocuting device, comprises an cylindrical outer body (15) about 70 cm high and about 30 cm wide.

Moreover, it comprises a fan (7) and a cylindrical-type electrocuting device (6) inside.

The fan (7) is cyclic and energy-saving, not working at night when insects are inactive, as is the case with the olive fruit fly.

Insects are caught by being trapped in the contacts of the electrocuting device (6), or they may fall and become trapped in the horizontal separator between the fan (7) and the electrocuting device (6) after being electrocuted. Insects enter the outer body (15), attracted by the volatile attracting compounds, disseminated from the inside of the electrocuting device, and are directed to the electrical contacts of the electrocuting device, being subjected to a 270V direct current. Attractive volatile compounds are released from an attractive food solution, in this example consisting of a 4% ammonium dihydrogen phosphate solution, and sex pheromone diffusers. The attractive food solution is gradually dispensed to an absorbent structure/material (8) from the 3L container (5) placed inside the electrocuting device (6), thanks to its cylindrical shape. About 0.5mL of the solution is cyclically poured on a square portion of sponge-fabric, of about 9 cm by 9 cm, with notches at its base to facilitate air circulation and contact with the sponge and promote solution volatility. The volatile compounds are sucked in by the fan (7) and sent into the electrocuting device (6), exiting through the openings between the contacts thereof and then outwards through the opening (2) at the top of the device.

In this model a 120x53cm photovoltaic solar panel (14), was implemented, which stores the energy in an individual battery (9), type 12V 12Ah, guaranteeing its autonomy during the operation of the trap.

This capturing device is supported by three metal feet (16), which place their upper edge at a height of 1.5 m.

## Claims

1. A device for capturing flying insects comprising:
- a substantially cylindrical shaped outer body (15),
- a fan (7) and an insect-trapping mechanism, both being placed inside of the outer body (15),
whereby the insect-trapping mechanism is composed of an electrocuting device (6) and specific volatile compounds for attracting of insects,
whereby the outer body (15) has two openings (2,13) one at each end of the outer body (15), wherein said outer body (15) is configured to be disposed in a vertical position thus defining an upper opening (2) and a lower opening (13), and
whereby the fan (7) is configured to operate cyclically, thus enabling to promote an air circulation within the outer body (15) for dissemination of the volatile compounds contained in a container (5) and / or poured on an absorbent material (8) placed inside the outer body (15), wherein the fan (7) sends the volatile compounds in the direction to the insect electrocuting devices (6),
the device further comprising:
- an attractive solution for flying insects, comprising the one or more specific volatile compounds for attracting of insects,
- a current converter (11) placed inside the outer body (15) and configured to supply current to the electrocuting device (6),
- a power supply for supplying power to the electrical and electronic components of the device for capturing flying insects
- optionally two or three flying insect sex pheromone diffusers (4) placed inside of the outer body (15), and
- optionally means for attachment to a fixed support (17) or to a movable support (16).

2. A device according to claim 1, **characterized in that** the outer body (15) is substantially cylindrical in shape, about 50 to 100 cm high, preferably about 60 to 80 cm high, more preferably about 70 cm high and 30 cm wide and is made of plastic, metal or wood material.

3. A device according to claim 1, **characterized in that** the fan (7) is capable of operating in continuous mode or in defined cycles at predefined time intervals.

4. A device according to claim 1, **characterized in that** the container (5) is composed of two units, each having a capacity of about 1,5L, and is located inside the electrocuting device (6).

5. A device according to claim 1, **characterized in that** the attractive food solution for flying insects comprises ammonium dihydrogen phosphate and/or Endomysil.

6. A device according to claim 1, **characterized in that** the absorbent material (8), where the attractive food solution is poured, is a textile or sponge material with flaps/notches which is fixed to the inner walls of said device, preferably below the fan (7).

7. Device according to claim 1, **characterized in that** the insect capturing means is composed of one electrocuting device (6) with metal filaments.

8. A device according to any one of the preceding claims, **characterized in that** the power supply is a battery (9).

9. A device according to any one of the preceding claims, **characterized in that** it comprises an energy generation means, in particular at least one solar panel (14).

10. A device according to any one of the preceding claims, **characterized in that** it comprises a temperature sensor and/or a humidity sensor (12).

11. Device according to any one of the preceding claims, **characterized in that** it comprises an individual support means, consisting of support feet (16) or a pole (17).

12. A process for capturing flying insects and phytosanitary controlling of fruit tree pests caused by such insects, **characterized in that** a set of devices according to claims 1 to 11 is placed in the areas where phytosanitary control is to be performed.

13. Process according to claim 12, **characterized in that** the flying insect to be captured is the olive fruit fly (*Bactrocera oleae*) for phytosanitary control of olive groves.

14. Process according to any one of claims 12 to 13, **characterized in that** between 11 and 12 devices according to any one of claims 1 to 10, are installed per hectare of olive grove in a diamond or rectangle arrangement, between the inter rows of the olive grove.

15. Process according to claim 13, **characterized in that** the devices according to any one of claims 1 to 11 are installed prior to the predicted breeding season of the olive fruit fly (*B. Oleae*)*.*

## Patentansprüche

1. Eine Vorrichtung zum Fangen von fliegenden Insekten, bestehend aus:
- Einem im Wesentlichen zylinderförmigen Außenkörper (15),
- einem Ventilator (7) und einem Insektenfangmechanismus, die sich beide innerhalb des Außenkörpers (15) befinden;
wobei der Insektenfangmechanismus aus einer Stromschlagvorrichtung (6) und spezifischen flüchtigen Verbindungen zum Anlocken von Insekten besteht,
wobei der Außenkörper (15) 2 Öffnungen (2,13) aufweist, die sich an jedem Ende des Außenkörpers (15) befinden, worin der genannte Außenkörper (15) so konfiguriert ist, um in einer senkrechten Position angeordnet zu werden, wodurch eine obere Öffnung (2) und eine untere Öffnung (13) entsteht, und
wobei der Ventilator (7) konfiguriert ist, um zyklisch zu arbeiten, wodurch die Luftzirkulation innerhalb des Außenkörpers (15) zur Verbreitung der in einem Behälter (5) enthaltenen flüchtigen Verbindungen gefördert werden kann und / oder auf ein im Inneren des Außenkörpers (15) angeordnetes absorbierendes Material (8) gegossen werden kann, worin der Ventilator (7) die flüchtigen Verbindungen in Richtung der Insekten-Vernichtungsvorrichtung (6) sendet,
die Vorrichtung ist **dadurch gekennzeichnet, dass** sie weiterhin Folgendes aufweist:
- Eine attraktive Lösung für fliegende Insekten, die eine oder mehrere spezifische flüchtige Verbindungen zum Anlocken von Insekten umfasst,
- einen Stromwandler (11), der sich innerhalb des Außenkörpers (15) befindet und konfiguriert ist, um die Stromschlagvorrichtung (6) mit Strom zu versorgen,
- Eine Stromversorgung, um die elektrischen und elektronischen Bauteile der Vorrichtung zum Fangen fliegender Insekten mit Strom zu versorgen,
- wahlweise 2 oder 3 Pheromon-Diffusoren (4) für fliegende Insekten, die sich innerhalb des Außenkörpers (15) befinden, und
- wahlweise Mittel zur Befestigung an einem festen Träger (17) oder an einem beweglichen Träger (16).

2. Eine Vorrichtung gemäß Anspruch 1, **dadurch gekennzeichnet, dass** der Außenkörper (15) im Wesentlichen eine zylindrische Form aufweist, etwa 50 bis 100 cm hoch, vorzugsweise etwa 60 bis 80 cm hoch, noch bevorzugter etwa 70 cm hoch und 30 cm breit ist und aus Kunststoff, Metall oder Holzwerkstoff hergestellt wird.

3. Eine Vorrichtung gemäß Anspruch 1, **dadurch gekennzeichnet, dass** der Ventilator (7) im Dauerbetrieb oder in definierten Zyklen bei vordefinierten Zeitintervallen betrieben werden kann.

4. Eine Vorrichtung gemäß Anspruch 1, **dadurch gekennzeichnet, dass** der Behälter (5) aus 2 Einheiten besteht, wobei jede ein Fassungsvermögen von etwa 1,5 l hat und sich innerhalb der Stromschlagvorrichtung (6) befindet.

5. Eine Vorrichtung gemäß Anspruch 1, **dadurch gekennzeichnet, dass** die attraktive Lebensmittellösung für fliegende Insekten aus Ammoniumdihydrogenphosphat und/oder Endomysil besteht.

6. Eine Vorrichtung gemäß Anspruch 1, **dadurch gekennzeichnet, dass** das absorbierende Material (8), in das die attraktive Lebensmittellösung gegossen wird, ein Textil- oder Schwammmaterial mit Klappen/Kerben ist, das an den Innenwänden der genannten Vorrichtung, vorzugsweise unterhalb des Ventilators (7), befestigt wird.

7. Vorrichtung gemäß Anspruch 1, **dadurch gekennzeichnet, dass** das Insektenfangmittel aus einer Stromschlagvorrichtung (6) mit Metallfilamenten besteht.

8. Eine Vorrichtung gemäß einem der vorangehenden Ansprüche, **dadurch gekennzeichnet, dass** die Stromversorgung eine Batterie (9) ist.

9. Eine Vorrichtung gemäß einem der vorhergehenden Ansprüche, **dadurch gekennzeichnet, dass** sie ein Energieerzeugungsmittel, insbesondere mindestens ein Solarmodul (14) beinhaltet.

10. Eine Vorrichtung gemäß einem der vorhergehenden Ansprüche, **dadurch gekennzeichnet, dass** sie einen Temperatursensor und/oder einen Feuchtigkeitssensor (12) umfasst.

11. Vorrichtung gemäß einem der vorhergehenden Ansprüche, **dadurch gekennzeichnet, dass** sie eine individuelle Stützeinrichtung umfasst, die aus Stützfüßen (16) oder einem Pfosten (17) besteht.

12. Ein Verfahren zum Einfangen von fliegenden Insekten und zur phytosanitären Kontrolle von Obstbaumschädlingen, die durch solche Insekten verursacht werden, **dadurch gekennzeichnet, dass** in den Bereichen, in denen die phytosanitäre Kontrolle durchgeführt werden soll, ein Satz von Vorrichtungen nach den Ansprüchen 1 bis 11 angeordnet ist.

13. Verfahren gemäß Anspruch 12, **dadurch gekennzeichnet, dass** das zu fangende fliegende Insekt zur phytosanitären Kontrolle von Olivenhainen, die Olivenfruchtfliege (*Bactrocera oleae*) ist.

14. Verfahren gemäß einem der Ansprüche 12 bis 13, **dadurch gekennzeichnet, dass** zwischen 11 und 12 Vorrichtungen nach einem der Ansprüche 1 bis 10 pro Hektar Olivenhain in einer Diamant- oder Rechteckanordnung zwischen den inneren Reihen des Olivenhains installiert werden.

15. Verfahren gemäß Anspruch 13, **dadurch gekennzeichnet, dass** die Vorrichtungen nach einem der Ansprüche 1 bis 11 vor der vorhergesagten Brutsaison der Olivenfruchtfliege (*B*. *oleae*) installiert werden.

## Revendications

1. Dispositif de capture d'insectes volants comprenant :
- un corps externe (15) de forme sensiblement cylindrique,
- un ventilateur (7) et un mécanisme de piège à insectes, tous deux placés à l'intérieur du corps externe (15),
dans lequel le mécanisme de piège à insectes est composé d'un dispositif d'électrocution (6) et de composés volatils spécifiques pour attirer les insectes,
dans lequel le corps externe (15) comporte 2 ouvertures (2, 13), une à chaque extrémité du corps externe (15), dans lequel ledit corps externe (15) est configuré pour être disposé en position verticale définissant ainsi une ouverture supérieure (2) et une ouverture inférieure (13), et
dans lequel le ventilateur (7) est configuré pour fonctionner de manière cyclique, permettant ainsi de favoriser une circulation d'air à l'intérieur du corps externe (15) pour la diffusion des composés volatils contenus dans un récipient (5) et/ou versés sur un matériau absorbant (8) placé à l'intérieur du corps externe (15), dans lequel le ventilateur (7) envoie les composés volatils en direction des dispositifs d'électrocution d'insectes (6),
le dispositif étant **caractérisé en ce qu'**il comprend en outre :
- - une solution attractive pour les insectes volants, comprenant le ou les composés volatils spécifiques pour attirer les insectes,
- - un convertisseur de courant (11) placé à l'intérieur du corps externe (15) et configuré pour fournir du courant au dispositif d'électrocution (6),
- - une alimentation électrique pour alimenter en électricité les composants électriques et électroniques du dispositif de capture d'insectes volants
- - éventuellement 2 ou 3 diffuseurs de phéromones sexuelles d'insectes volants (4) placés à l'intérieur du corps externe (15), et
- - éventuellement des moyens de fixation à un support fixe (17) ou à un support mobile (16).

2. Dispositif selon la revendication 1, **caractérisé en ce que** le corps externe (15) est de forme sensiblement cylindrique, d'environ 50 à 100 cm de hauteur, de préférence d'environ 60 à 80 cm de hauteur, plus préférablement d'environ 70 cm de hauteur et 30 cm de largeur et est fabriqué en plastique, en métal ou en bois.

3. Dispositif selon la revendication 1, **caractérisé en ce que** le ventilateur (7) est en mesure de fonctionner en mode continu ou selon des cycles définis à des intervalles de temps prédéfinis.

4. Dispositif selon la revendication 1, **caractérisé en ce que** le récipient (5) est composé de 2 unités, ayant chacune une capacité d'environ 1,5L et est situé à l'intérieur du dispositif d'électrocution (6).

5. Dispositif selon la revendication 1, **caractérisé en ce que** la solution alimentaire attractive pour insectes volants comprend du dihydrogénophosphate d'ammonium et/ou de l'Endomysil.

6. Dispositif selon la revendication 1, **caractérisé en ce que** le matériau absorbant (8), où est versée la solution alimentaire attractive, est un matériau textile ou éponge à rabats/encoches qui est fixé aux parois internes dudit dispositif, de préférence sous le ventilateur (7).

7. Dispositif selon la revendication 1, **caractérisé en ce que** le moyen de capture des insectes est composé d'un dispositif d'électrocution (6) à filaments métalliques.

8. Dispositif selon l'une quelconque des revendications précédentes, **caractérisé en ce que** l'alimentation électrique est une batterie (9).

9. Dispositif selon l'une quelconque des revendications précédentes, **caractérisé en ce qu'**il comprend un moyen de génération d'énergie, notamment au moins un panneau solaire (14).

10. Dispositif selon l'une quelconque des revendications précédentes, **caractérisé en ce qu'**il comprend un capteur de température et/ou un capteur d'humidité (12).

11. Dispositif selon l'une quelconque des revendications précédentes, **caractérisé en ce qu'**il comprend un moyen de support individuel, constitué de pieds de support (16) ou d'une perche (17).

12. Procédé de capture d'insectes volants et de contrôle phytosanitaire des ravageurs des arbres fruitiers provoqués par de tels insectes, **caractérisé en ce qu'**un ensemble de dispositifs selon les revendications 1 à 11 est placé dans les zones où doit être effectué le contrôle phytosanitaire.

13. Procédé selon la revendication 12, **caractérisé en ce que** l'insecte volant à capturer est la mouche de l'olivier (*Bactrocera oleae*) pour le contrôle phytosanitaire des oliveraies.

14. Procédé selon l'une quelconque des revendications 12 à 13, **caractérisé en ce qu'**entre 11 et 12 dispositifs selon l'une quelconque des revendications 1 à 10, sont installés par hectare d'oliveraie selon une disposition en losange ou en rectangle, entre les inter-rangées de l'oliveraie.

15. Procédé selon la revendication 13, **caractérisé en ce que** les dispositifs selon l'une quelconque des revendications 1 à 11 sont installés avant la saison de reproduction prévue de la mouche de l'olivier (*B. Oleae*)*.*
